# EUROPEAN PATENT APPLICATION

(11) **EP 4 431 312 A1**
(43) Date of publication of application: **18.09.2024**
(21) Application number: 24157728.7
(22) Date of filing: 15.02.2024
(51) Int. Cl.: B60C 11/03, B60C 11/12

(54) **TIRE**

(30) Priority: 15.03.2023 JP 2023041219
(71) Applicant: Sumitomo Rubber Industries, Ltd., Kobe-shi, Hyogo 651-0072 (JP)
(72) Inventor: SAWAKAMI, Isao, Kobe-shi, 651-0072 (JP); SASAKI, Tatsuya, Kobe-shi, 651-0072 (JP); OISHI, Naoto, Kobe-shi, 651-0072 (JP); MIYAZAWA, Ken, Kobe-shi, 651-0072 (JP); SANAE, Ryuhei, Kobe-shi, 651-0072 (JP)
(74) Representative: Manitz Finsterwald Patent- und Rechtsanwaltspartnerschaft mbB

(57) **Abstract**

A tire includes a tread portion 2 having groove-shaped elements 5. The groove-shaped elements 5 include first groove-shaped elements 6 and second groove-shaped elements 7 which are inclined and arranged in a first arrangement pattern over one round of the tire. Each first groove-shaped element 6 has a first outer end and a first inner end. Each second groove-shaped element 7 has a second outer end and a second inner end. In the first arrangement pattern, the first outer end of one of the first groove-shaped elements 6 is disposed at the same position in a tire circumferential direction as the second inner end of one of the second groove-shaped elements 7, and the second outer end of one of the second groove-shaped elements 7 is disposed at the same position in the tire circumferential direction as the first inner end of one of the first groove-shaped elements 6.

## Description

### BACKGROUND OF THE INVENTION

### Field of the Invention

The present invention relates to a tire.

### Background Art

From the viewpoint of improving ice and snow road performance and steering stability on a dry road surface, a tread portion of a tire generally has grooves or sipes (e.g., see Japanese Laid-Open Patent Publication No. 2019-156025). However, the grooves or the sipes cause noise during running.

As, in recent years, vehicles have been becoming quieter, further improvement in noise performance of tires is required, and it is necessary to reduce the running noise caused by grooves or sipes.

The present invention has been made in view of the above-described circumstances, and a main object of the present invention is to provide a tire capable of improving noise performance while maintaining wet performance and on-snow performance.

### SUMMARY OF THE INVENTION

The present invention is directed to a tire including a tread portion. The tread portion includes a first tread end and a second tread end, and a ground-contact surface between the first tread end and the second tread end. The tread portion has a plurality of groove-shaped elements opened at either one of the first tread end or the second tread end and extending to a center portion, in a tire axial direction, of the ground-contact surface. The plurality of groove-shaped elements include a plurality of first groove-shaped elements and a plurality of second groove-shaped elements which are inclined relative to a tire circumferential direction and the tire axial direction. The plurality of first groove-shaped elements and the plurality of second groove-shaped elements are arranged in a first arrangement pattern over one round of the tire. Each of the plurality of first groove-shaped elements has a first outer end opened at the first tread end or the second tread end, and a first inner end disposed on the center portion side of the ground-contact surface. Each of the plurality of second groove-shaped elements has a second outer end opened at the first tread end or the second tread end, and a second inner end disposed on the center portion side of the ground-contact surface. In the first arrangement pattern, the first outer end of one of the first groove-shaped elements is disposed at the same position in the tire circumferential direction as the second inner end of one of the second groove-shaped elements, and the second outer end of one of the second groove-shaped elements is disposed at the same position in the tire circumferential direction as the first inner end of one of the first groove-shaped elements.

The tire of the present invention can improve noise performance while maintaining wet performance and on-snow performance.

### BRIEF DESCRIPTION OF THE DRAWINGS

FIG. 1 is a development of a tread portion of a tire according to one embodiment of the present invention;
FIG. 2 is a development of a tread portion of a tire according to another embodiment;
FIG. 3 is a development of a tread portion of a tire according to still another embodiment;
FIG. 4 is a development of a tread portion of a tire according to still another embodiment;
FIG. 5 is a development of a tread portion of a tire according to still another embodiment;
FIG. 6 is a development of a tread portion of a tire according to still another embodiment; and
FIG. 7 is a development of a tread portion of a tire according to a comparative example.

### DETAILED DESCRIPTION

Hereinafter, some embodiments of the present invention will be described with reference to the drawings. The drawings may contain exaggerated expressions and expressions that differ from the dimensional ratio of the actual structure in order to help the understanding of the present invention. In addition, the same or common elements are denoted by the same reference characters throughout the embodiments, and the redundant description thereof is omitted.

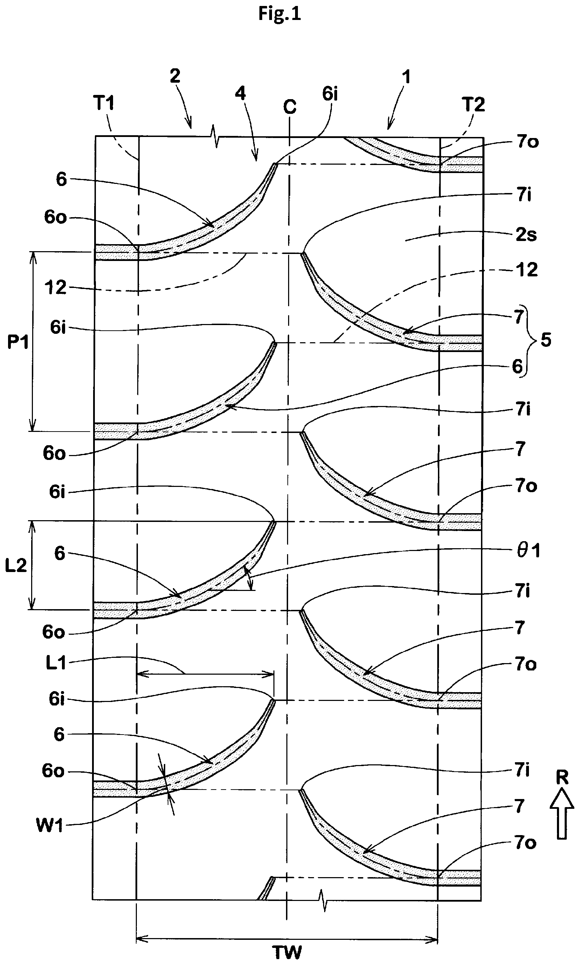

FIG. 1 is a development of a tread portion 2 of a tire 1, in a standardized state, of the present embodiment. As shown in FIG. 1, the tire 1 of the present embodiment is embodied as a pneumatic tire for a passenger car, for example. As a preferable mode, the tire 1 of the present embodiment is used as a tire for all seasons on the assumption of running on both a dry road surface and an ice/snow road surface. The present invention may be used for a motorcycle tire or a heavy duty tire. In addition, the tire 1 of the present embodiment has a designated rotation direction R, and the upward direction corresponds to the rotation direction R in each drawing for the present description.

In the case of a pneumatic tire for which various standards are defined, the "standardized state" is a state where the tire is fitted on a standardized rim and inflated to a standardized internal pressure and no load is applied to the tire. In the case of a non-pneumatic tire or a tire for which various standards are not defined, the standardized state means a standard use state, corresponding to the purpose of use of the tire, where no load is applied to the tire. In the present description, unless otherwise specified, dimensions and the like of components of the tire are values measured in the standardized state. In the present description, unless otherwise specified, a known method can be appropriately used as a method for measuring the dimensions.

The "standardized rim" represents a rim that is defined by a standard, in a standard system including the standard on which the tire is based, for each tire, and is, for example, "standard rim" in the JATMA standard, "Design Rim" in the TRA standard, or "Measuring Rim" in the ETRTO standard.

The "standardized internal pressure" represents an air pressure that is defined by a standard, in a standard system including the standard on which the tire is based, for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tread portion 2 includes a first tread end T1 and a second tread end T2, and a ground-contact surface 2s between the first tread end T1 and the second tread end T2. The first tread end T1 and the second tread end T2 each indicate an outermost ground-contact position in a tire axial direction, in the case where 80% of a standardized load is applied to the tire 1 in the standardized state and the tire 1 is in contact with a flat plane at a chamber angle of 0°.

In the case of a pneumatic tire for which various standards are defined, the "standardized load" represents a load that is defined by a standard, in a standard system including the standard on which the tire is based, for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case of a tire for which various standards are not defined, the "standardized load" refers to the maximum load that can be applied when the tire is used, according to the above-described standards.

The tread portion 2 has a plurality of groove-shaped elements 5 formed therein. In each drawing of the present description, the groove-shaped elements 5 are indicated with dots. These groove-shaped elements 5 are each opened at either one of the first tread end T1 or the second tread end T2, and extend to a center portion 4, in the tire axial direction, of the ground-contact surface 2s. Each of the groove-shaped elements 5 is a void that is recessed from the ground-contact surface 2s of the tread portion 2 and that has a longitudinal direction, and includes both a sipe and a groove, as an inclusive concept. In the present description, the groove-shaped elements 5 are grooves. Alternatively, the groove-shaped elements 5 may be sipes. In each drawing of the present description, the components other than the groove-shaped elements 5 relating to the present invention are not shown. Accordingly, in specific implementation of the present invention, the tread portion 2 may additionally include grooves or sipes not shown in each drawing of the present description.

In the present description, the "groove" refers to an element in which a width orthogonal to the longitudinal direction is larger than 2 mm. The width of each groove is, for example, not smaller than 3 mm and preferably not smaller than 5 mm. Thus, even when the groove is brought into contact with the ground in a state where the above-described standardized load is applied to the tire, a pair of groove walls included in the groove are not in contact with each other and the volume of the groove is maintained. The upper limit of the width of the groove is not particularly limited, but the width is, for example, not larger than 15 mm and preferably not larger than 10 mm.

In the present description, the "sipe" refers to a slit-shaped void in which a width orthogonal to the longitudinal direction is not larger than 2 mm and preferably not larger than 1.5 mm. For example, when the sipe is brought into contact with the ground in a state where the above-described standardized load is applied, a pair of sipe walls work so as to be at least partially in contact with each other. Therefore, the sipes serve to minimize reduction in the stiffness of a land portion and further to maintain steering stability.

The center portion 4, in the tire axial direction, of the ground-contact surface 2s is a region on which relatively large ground-contact pressure acts during running. Specifically, the center portion 4 means a region including a tire equator C at the center position in the tire axial direction and having a width, in the tire axial direction, of not more than 50% of a tread width TW.

The plurality of groove-shaped elements 5 include a plurality of first groove-shaped elements 6 and a plurality of second groove-shaped elements 7 which are inclined relative to the tire circumferential direction and the tire axial direction. In addition, the plurality of first groove-shaped elements 6 and the plurality of second groove-shaped elements 7 are arranged in a first arrangement pattern over one round of the tire. Each of the plurality of first groove-shaped elements 6 has a first outer end 6o opened at the first tread end T1 or the second tread end T2, and a first inner end 6i disposed on the center portion 4 side of the ground-contact surface 2s. Each of the plurality of second groove-shaped elements 7 has a second outer end 7o opened at the first tread end T1 or the second tread end T2, and a second inner end 7i disposed on the center portion 4 side of the ground-contact surface 2s. In the embodiment shown in FIG. 1, the first groove-shaped elements 6 are opened at the first tread end T1, and the second groove-shaped elements 7 are opened at the second tread end T2. However, as described below, in the present invention, both the first groove-shaped elements 6 and the second groove-shaped elements 7 may be opened at the first tread end T1.

In the first arrangement pattern, the first outer end 6o of one of the first groove-shaped elements 6 is disposed at the same position as the second inner end 7i of one of the second groove-shaped elements 7 in the tire circumferential direction, and the second outer end 7o of one of the second groove-shaped elements 7 is disposed at the same position as the first inner end 6i of one of the first groove-shaped elements 6 in the tire circumferential direction. In the present invention, the first groove-shaped elements 6 and the second groove-shaped elements 7 are displaced from each other in the tire circumferential direction, to achieve the above-described arrangement pattern. That is, the second groove-shaped element 7 that has the second inner end 7i disposed at the same position as the first outer end 6o of one of the first groove-shaped elements 6 is different from the second groove-shaped element 7 that has the second outer end 7o disposed at the same position as the first inner end 6i of said one first groove-shaped element 6. In each drawing of the present description, for easy understanding of the above-described arrangement, virtual lines 12 each connecting the above-described inner end and the above-described outer end are indicated by alternate long and two short dashes lines. The tire 1 of the present invention has the above-described structure, and, therefore, noise performance can be improved while wet performance and on-snow performance are maintained. The mechanism is as follows.

In the present invention, the first groove-shaped elements 6 and the second groove-shaped elements 7 allow exertion of frictional force onto a road surface, and thus wet performance and on-snow performance can be maintained.

On the other hand, conventionally, pitch sound has been known as noise during running with a tire. One of factors causing the pitch sound is, for example, impact force that is generated when a groove-shaped element is brought into contact with a road surface. Due to the impact force, a tread portion or a sidewall portion (not shown) periodically vibrate, and thus the pitch sound may occur.

In the present invention, the plurality of groove-shaped elements 5 are arranged in the above-described first arrangement pattern, and thus the first groove-shaped elements 6 and the second groove-shaped elements 7 can be alternately brought into contact with the ground constantly and continuously during running with the tire. Thus, fluctuation of the above-described impact force can be reduced. Therefore, the tire 1 of the present invention can reduce pitch sound caused by impact force and can improve noise performance.

The above-described "arranged in a first arrangement pattern over one round of the tire" means that the first groove-shaped elements 6 and the second groove-shaped elements 7 are arranged at a predetermined pitch over one round of the tire, and the inner ends and the outer ends of 80% or more of the groove-shaped elements 5 are arranged as described above. In a preferable mode, the inner ends and the outer ends of 90% or more of the groove-shaped elements 5 are arranged as described above, and in a more preferable mode, the inner ends and the outer ends of all the groove-shaped elements 5 are arranged as described above.

In addition, from the viewpoint of allowing tolerance in a rubber product such as a tire, "one of the inner ends and one of the outer ends are disposed at the same position in the tire circumferential direction" also implies that a distance in the tire circumferential direction between the inner end and the outer end is not more than 5% of a length (length in the tire circumferential direction from the inner end to the outer end), in the tire circumferential direction, of the groove-shaped element 5. In a preferable mode, the distance in the tire circumferential direction between the inner end and the outer end is 0.

Hereinafter, more detailed configurations of the present embodiment will be described. Each configuration described below shows a specific mode of the present embodiment. Therefore, it is needless to say that the present disclosure can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

In the present embodiment, the plurality of first groove-shaped elements 6 and the plurality of second groove-shaped elements 7 are substantially line-symmetrical with respect to the tire equator C except that the plurality of first groove-shaped elements 6 and the plurality of second groove-shaped elements 7 are displaced from each other in the tire circumferential direction. Therefore, the specific configuration of the first groove-shaped elements 6 described below can also be applied to the second groove-shaped elements 7.

A one-pitch length P1 in the tire circumferential direction for the first groove-shaped elements 6 is, for example, 40% to 60% of the tread width TW. Thus, wet performance and steering stability on a dry road surface are improved in a well-balanced manner.

Each of the plurality of first groove-shaped elements 6 is inclined in a first direction (upper right direction in FIG. 1) relative to the tire axial direction. Each of the plurality of second groove-shaped elements 7 is inclined in a second direction (lower right direction in FIG. 1) opposite to the first direction relative to the tire axial direction. Thus, frictional force can be exerted in multiple directions by each groove-shaped element 5, and wet performance and on-snow performance can be further improved.

Each of the plurality of first groove-shaped elements 6 terminates in the ground-contact surface 2s such that the first inner end 6i thereof does not communicate with another groove. Each of the plurality of second groove-shaped elements 7 terminates in the ground-contact surface 2s such that the second inner end 7i thereof does not communicate with another groove. In addition, in the present embodiment, the first groove-shaped elements 6 and the second groove-shaped elements 7 terminate so as not to reach the tire equator C. Thus, noise performance is improved, the stiffness of the center portion 4 is maintained, and steering stability on a dry road surface can also be improved.

Each of the first groove-shaped elements 6 and the second groove-shaped elements 7 is preferably curved in an arc shape. In addition, an angle of the first groove-shaped element 6 relative to the tire axial direction is preferably increased continuously from the first tread end T1 toward the center portion 4 of the ground-contact surface 2s. An average angle θ1 of the first groove-shaped element 6 relative to the tire axial direction is, for example, 30 to 40°. In addition, a maximum angle of the first groove-shaped element 6 relative to the tire axial direction is, for example, 60 to 70°. The same also applies to the second groove-shaped element 7.

The angle of each groove-shaped element 5 is measured at the center line thereof. The average angle θ1 is a value obtained by equally dividing the center line of the corresponding groove-shaped element 5 into a plurality of minute regions and dividing the total of the angles of the respective minute regions relative to the tire axial direction by the number of the minute regions. Each minute region is preferably as small as possible, and has, for example, a length of not larger than 5 mm. Frictional force can be exerted in the tire axial direction and the tire circumferential direction in a well-balanced manner by the first groove-shaped elements 6 and the second groove-shaped elements 7 having the above-described angles, and such first groove-shaped elements 6 and such second groove-shaped elements 7 contribute to enhancement of wet performance and on-snow performance.

A length L1 (length in the tire axial direction from the first outer end 6o to the first inner end 6i), in the tire axial direction, of each first groove-shaped element 6 is, for example, not less than 40% of the tread width TW, and preferably 40% to 60% of the tread width TW. In a preferable mode, the first groove-shaped elements 6 do not intersect the tire equator C. In addition, a length L2 (length in the tire circumferential direction from the first outer end 6o to the first inner end 6i), in the tire circumferential direction, of the first groove-shaped element 6 is 40% to 60% of the one-pitch length P1 in the tire circumferential direction for the first groove-shaped elements 6. Such first groove-shaped elements 6 enhance wet performance and steering stability on a dry road surface in a well-balanced manner.

A width W1 of each first groove-shaped element 6 continuously decreases from the first outer end 6o toward the first inner end 6i. In addition, the first groove-shaped element 6 is formed so as to have a constant width outside the first outer end 6o in the tire axial direction. However, the first groove-shaped element 6 is not limited thereto.

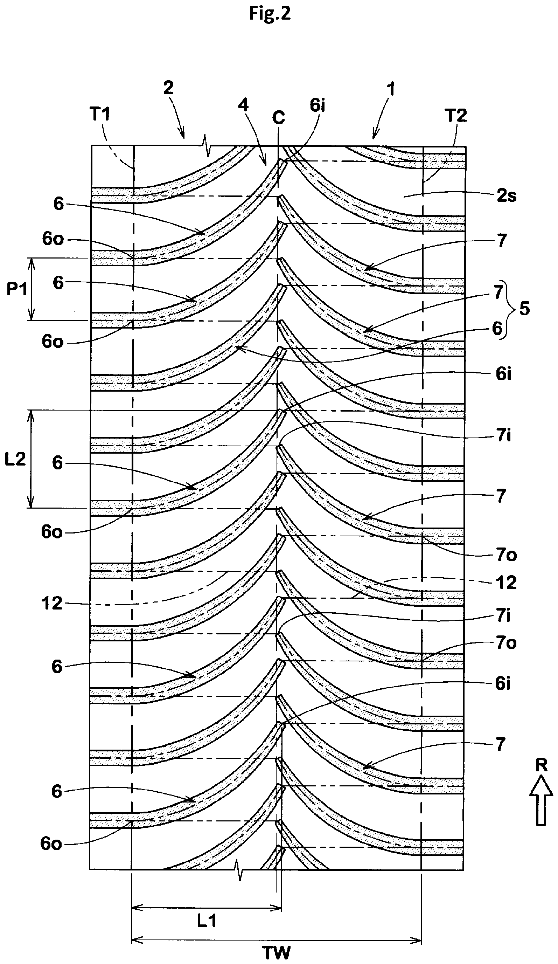

Hereinafter, other embodiments of the present invention will be described with reference to FIG. 2 to FIG. 6. It is needless to say that a specific configuration of each first groove-shaped element 6 described below can also be applied to each second groove-shaped element 7. The one-pitch length for the groove-shaped elements 5 of an embodiment shown in FIG. 2 is small, compared to that of the embodiment in FIG. 1. Specifically, the one-pitch length P1 for the first groove-shaped elements 6 is 15% to 30% of the tread width TW. The same applies to the second groove-shaped elements 7. In this embodiment, wet performance and on-snow performance can be further enhanced.

The length L1, in the tire axial direction, of each first groove-shaped element 6 of the embodiment is 40% to 60% of the tread width TW. In a more preferable mode, the first groove-shaped elements 6 reach the tire equator C. In addition, the length L2, in the tire circumferential direction, of the first groove-shaped element 6 is larger than the one-pitch length P1 for the first groove-shaped elements 6. Specifically, the length L2 of the first groove-shaped element 6 is 140% to 180% of the one-pitch length P1. The same applies to the second groove-shaped elements 7.

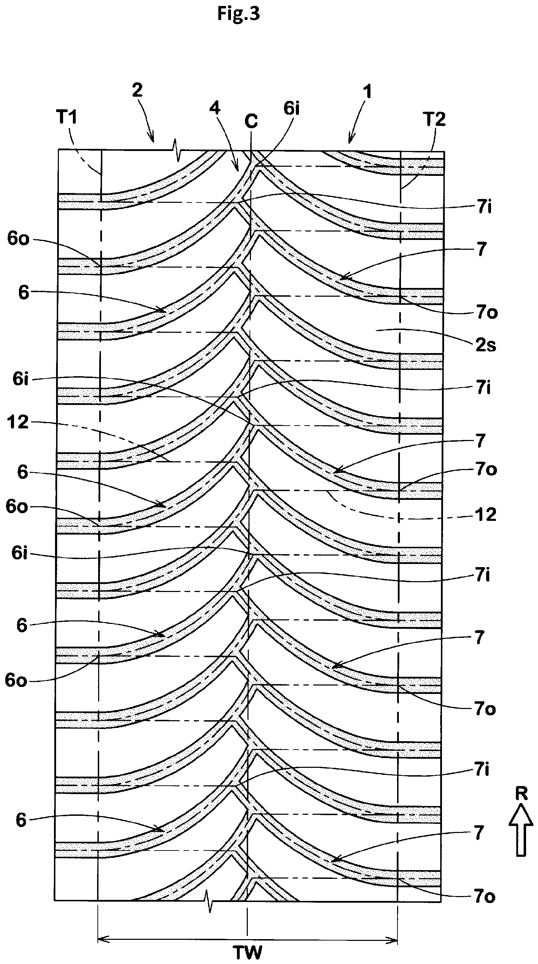

In an embodiment shown in FIG. 3, while the above-described first arrangement pattern is maintained, the first inner ends 6i of the plurality of first groove-shaped elements 6 respectively communicate with the second groove-shaped elements 7. The second inner ends 7i of the plurality of second groove-shaped elements 7 respectively communicate with the first groove-shaped elements 6. In this embodiment, wet performance and on-snow performance can be further improved. The first inner end 6i of each first groove-shaped element 6 of the embodiment corresponds to an intersection of the center line of the first groove-shaped element 6 and a virtual line obtained by extending the groove edge of the second groove-shaped element 7. The same applies to the second inner ends 7i of the second groove-shaped elements 7.

The dimensions of the groove-shaped element 5 in FIG. 2 can be applied to the dimensions of the groove-shaped element 5 in FIG. 3, and the description thereof is omitted.

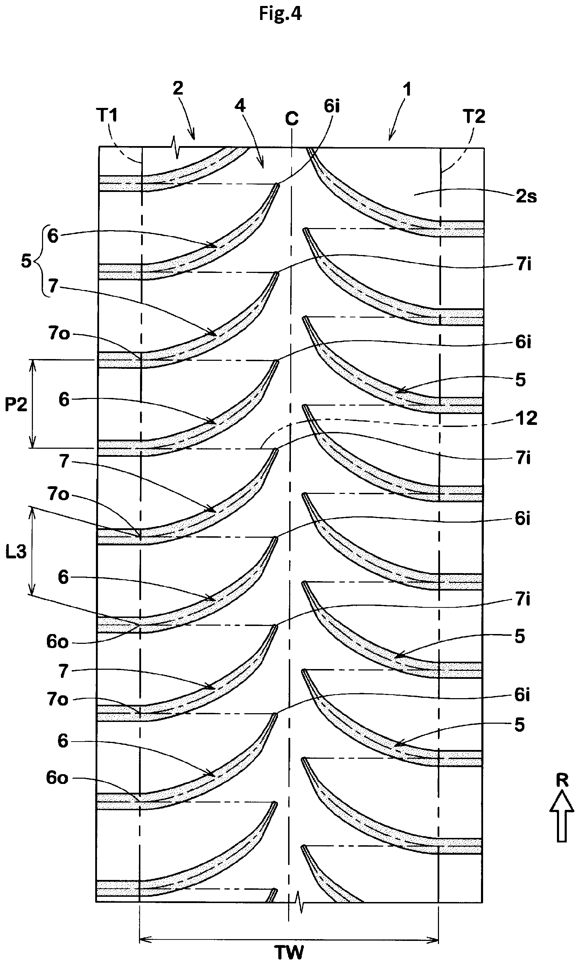

In an embodiment shown in FIG. 4, unlike the embodiments shown in FIG. 1 to FIG. 3, both the first groove-shaped elements 6 and the second groove-shaped elements 7 are provided on the first tread end T1 side with respect to the tire equator C. Specifically, each of the plurality of first groove-shaped elements 6 and the plurality of second groove-shaped elements 7 is opened at the first tread end T1. The first groove-shaped elements 6 and the second groove-shaped elements 7 are provided alternately in the tire circumferential direction. Further, each of the plurality of first groove-shaped elements 6 and each of the plurality of second groove-shaped elements 7 are inclined in the same direction relative to the tire axial direction. In the embodiment shown in FIG. 4, in such arrangement of the groove-shaped elements 5, the above-described first arrangement pattern is achieved. Even in such a mode, improvement in noise performance can be expected.

In this embodiment, a one-pitch length P2 in the tire circumferential direction for the first groove-shaped element 6 and the second groove-shaped element 7 is, for example, 25% to 35% of the tread width TW. In addition, a length L3, in the tire circumferential direction, of each of the first groove-shaped elements 6 and the second groove-shaped elements 7 is the same as the one-pitch length P2.

In this embodiment, the first groove-shaped element 6 and the second groove-shaped element 7 have substantially the same configuration. In addition, the configuration of the first groove-shaped element 6 shown in FIG. 1 can be applied appropriately to the first groove-shaped element 6 and the second groove-shaped element 7 of the embodiment, and the description thereof is omitted.

In the embodiment shown in FIG. 4, a configuration is not particularly limited in a region on the second tread end T2 side with respect to the tire equator C. As a preferable mode, in FIG. 4, the above-described groove-shaped elements 5 disposed on the first tread end T1 side with respect to the tire equator C are also disposed in the region on the second tread end T2 side with respect to the tire equator C. Thus, the configuration of the region on the first tread end T1 side with respect to the tire equator C and the configuration of the region on the second tread end T2 side with respect to the tire equator C are substantially line-symmetrical with respect to the tire equator C except that the region on the first tread end T1 side with respect to the tire equator C and the region on the second tread end T2 side with respect to the tire equator C are displaced from each other in the tire circumferential direction. Thus, noise performance can be improved while wet performance and on-snow performance are maintained at a high level.

However, the present invention is not limited to the above-described mode. In a modification of the embodiment shown in FIG. 4, in the region on the second tread end T2 side with respect to the tire equator C, the groove-shaped elements 5 each having a different shape may be disposed, or no groove-shaped element 5 may be disposed.

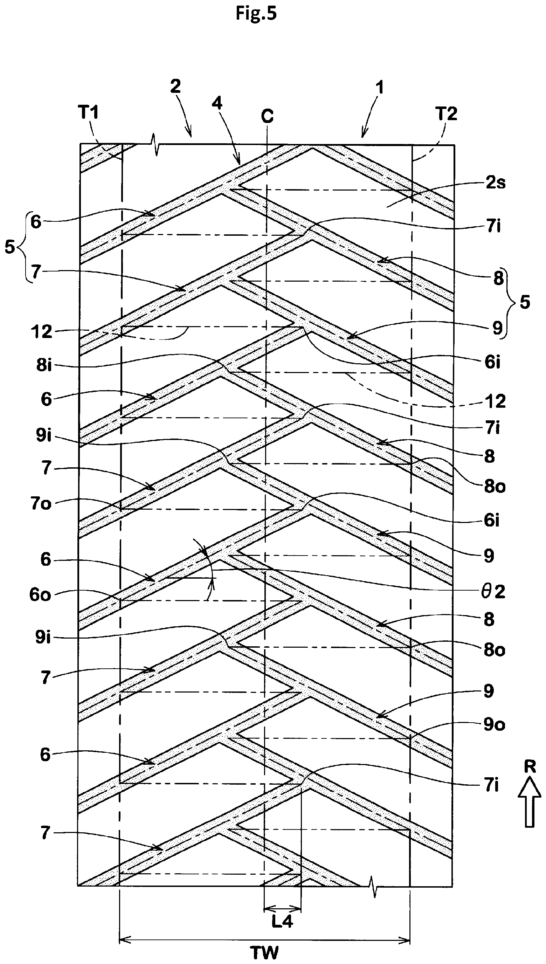

In an embodiment shown in FIG. 5, as in the embodiment shown in FIG. 4, in the region on the first tread end T1 side with respect to the tire equator C, the first groove-shaped elements 6 and the second groove-shaped elements 7 are provided alternately in the tire circumferential direction. In addition thereto, in the region on the second tread end T2 side with respect to the tire equator C, third groove-shaped elements 8 and fourth groove-shaped elements 9 having substantially the same configurations as the first groove-shaped elements 6 and the second groove-shaped elements 7 are provided alternately in the tire circumferential direction.

Each of the third groove-shaped elements 8 has a third outer end 8o disposed on the second tread end T2 side, and a third inner end 8i disposed on the center portion 4 side of the ground-contact surface 2s. Each of the fourth groove-shaped elements 9 has a fourth outer end 9o disposed on the second tread end T2 side, and a fourth inner end 9i disposed on the center portion 4 side of the ground-contact surface 2s. In the embodiment shown in FIG. 5, the third outer end 8o of one of the third groove-shaped elements 8 is disposed at the same position in the tire circumferential direction as the fourth inner end 9i of one of the fourth groove-shaped elements 9. In addition, the fourth outer end 9o of one of the fourth groove-shaped elements 9 is disposed at the same position in the tire circumferential direction as the third inner end 8i of one of the third groove-shaped elements 8 (this arrangement pattern is referred to as second arrangement pattern). Thus, noise performance is further improved.

Further, in the embodiment shown in FIG. 5, the first inner ends 6i of the first groove-shaped elements 6 respectively communicate with the fourth groove-shaped elements 9. The second inner ends 7i of the second groove-shaped elements 7 respectively communicate with the third groove-shaped elements 8. Similarly, the third inner ends 8i of the third groove-shaped elements 8 respectively communicate with the first groove-shaped elements 6. The fourth inner ends 9i of the fourth groove-shaped elements 9 respectively communicate with the second groove-shaped elements 7. Thus, wet performance and on-snow performance can be maintained at a higher level.

In this embodiment, each groove-shaped element 5 linearly extends. An average angle θ2 of the groove-shaped element 5 relative to the tire axial direction is 20 to 40°. In addition, the first inner ends 6i and the second inner ends 7i are located on the second tread end T2 side with respect to the tire equator C, and the third inner ends 8i and the fourth inner ends 9i are located on the first tread end T1 side with respect to the tire equator C. A distance L4 in the tire axial direction from the tire equator C to each inner end is 5% to 20% of the tread width TW. However, the embodiment shown in FIG. 5 may not necessarily be implemented in such a specific numerical range.

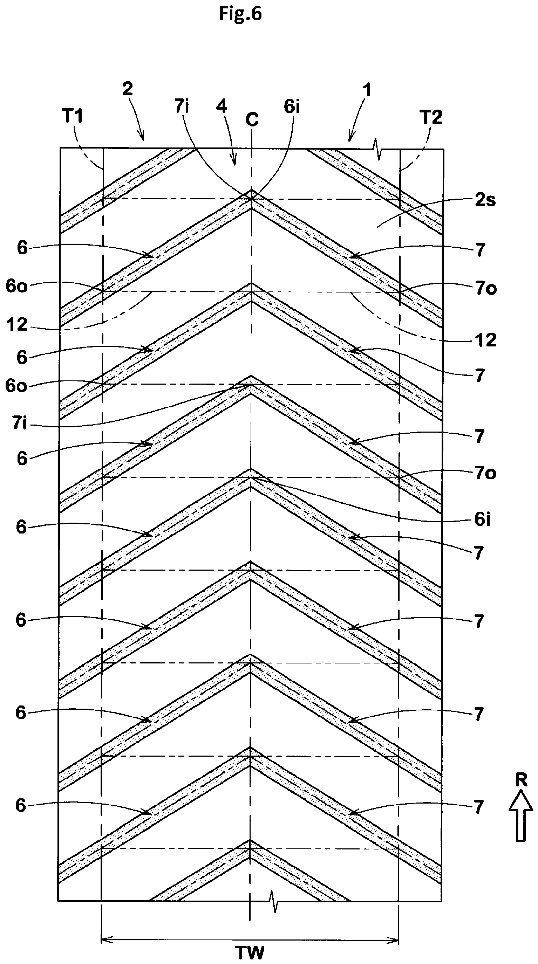

In an embodiment shown in FIG. 6, the tread portion 2 has the plurality of first groove-shaped elements 6 opened at the first tread end T1 and the plurality of second groove-shaped elements 7 opened at the second tread end T2. In addition, each of the plurality of first groove-shaped elements 6 is inclined in a first direction relative to the tire axial direction. Each of the plurality of second groove-shaped elements 7 is inclined in a second direction opposite to the first direction relative to the tire axial direction. Further, these groove-shaped elements 5 linearly extend, and one of the first groove-shaped elements 6 and one of the second groove-shaped elements 7 communicate with each other so as to form a V shape. In a preferable mode, the first groove-shaped element 6 and the second groove-shaped element 7 communicate with each other in a V shape so as to protrude in the rotation direction R. In the embodiment shown in FIG. 6, in such arrangement of the groove-shaped elements 5, the above-described first arrangement pattern is achieved. In such an embodiment, in addition to the above-described improvement in noise performance, improvement in uneven wear resistance around the tire equator C can also be expected.

Although some embodiments of the tire of the present invention have been described in detail above, the present invention is not limited to the above-described specific embodiments, and various modifications can be made to implement the present invention.

### EXAMPLE

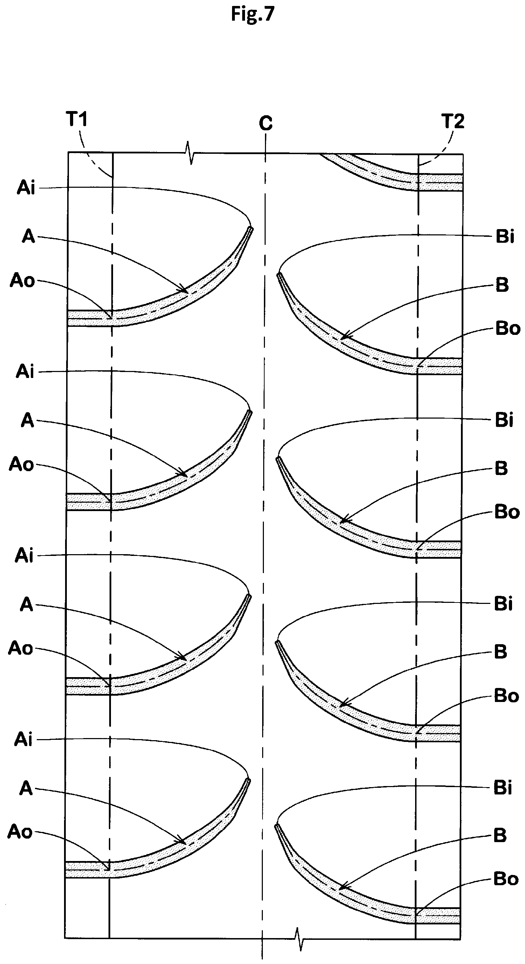

As examples, pneumatic tires each having a size of 195/65R15 (rim to which the tire was mounted: 15×6.0, internal pressure: 250 kPa) as shown in FIG. 1 to FIG. 6 were produced as sample tires. As a comparative example, a sample tire shown in FIG. 7 was produced. A plurality of groove-shaped elements were arranged at the tread portion of the tire of the comparative example, but were not arranged in the above-described first arrangement pattern. That is, as shown in FIG. 7, in the tire of the comparative example, a first outer end Ao of one of first groove-shaped elements A and a second inner end Bi of one of second groove-shaped elements B were disposed at different positions in the tire circumferential direction. Similarly, a second outer end Bo of one of the second groove-shaped elements B and a first inner end Ai of one of the first groove-shaped elements A were disposed at different positions in the tire circumferential direction. The tire of the comparative example was substantially the same as the tires of the examples, except for the above-described matters. For these test tires, noise performance, wet performance, and on-snow performance were tested. The test methods were as follows.

### <Noise performance>

Noise was measured when running with each test tire on a drum tester was performed under the conditions that an applied vertical load was 4.51 kN and a speed was 40 to 100 km/h. The results are indicated as indexes with the reciprocal of sound pressure of the noise in the comparative example being 100. The greater the value is, the smaller the noise is and the better the noise performance is.

### <Wet performance and on-snow performance>

Running with each test tire on a wet road surface or a snow road surface reproduced by an inside drum testing machine was performed, and grip force during the running was measured. The results are indicated as indexes with grip force in the comparative example being 100. The greater the value is, the better the wet performance or the on-snow performance is.

The test results are indicated in Table 1.

**[Table 1]**

| | Comp. Ex. | Ex. 1 | Ex. 2 | Ex. 3 | Ex. 4 | Ex. 5 | Ex. 6 |
|---|---|---|---|---|---|---|---|
| Figure showing arrangement pattern of tread portion | FIG. 7 | FIG. 1 | FIG. 2 | FIG. 3 | FIG. 4 | FIG. 5 | FIG. 6 |
| Noise performance (index) | 100 | 120 | 125 | 120 | 125 | 120 | 125 |
| Wet performance (index) | 100 | 100 | 110 | 115 | 105 | 115 | 110 |
| On-snow performance (index) | 100 | 100 | 110 | 115 | 105 | 115 | 110 |

Table 1 shows that, in each example, wet performance and on-snow performance were maintained so as to indicate 100 to 115 points, and noise performance indicated 120 to 125 points and thus was significantly improved. That is, the tire of the present invention was confirmed to improve noise performance while maintaining wet performance and on-snow performance.

### [Appendixes]

The present invention includes the following aspects.

### [Present Invention 1]

A tire including a tread portion, in which
the tread portion includes a first tread end and a second tread end, and a ground-contact surface between the first tread end and the second tread end,
the tread portion has a plurality of groove-shaped elements opened at either one of the first tread end or the second tread end and extending to a center portion, in a tire axial direction, of the ground-contact surface,
the plurality of groove-shaped elements include a plurality of first groove-shaped elements and a plurality of second groove-shaped elements which are inclined relative to a tire circumferential direction and the tire axial direction,
the plurality of first groove-shaped elements and the plurality of second groove-shaped elements are arranged in a first arrangement pattern over one round of the tire,
each of the plurality of first groove-shaped elements has a first outer end opened at the first tread end or the second tread end, and a first inner end disposed on the center portion side of the ground-contact surface,
each of the plurality of second groove-shaped elements has a second outer end opened at the first tread end or the second tread end, and a second inner end disposed on the center portion side of the ground-contact surface, and
in the first arrangement pattern,
the first outer end of one of the first groove-shaped elements is disposed at the same position in the tire circumferential direction as the second inner end of one of the second groove-shaped elements, and
the second outer end of one of the second groove-shaped elements is disposed at the same position in the tire circumferential direction as the first inner end of one of the first groove-shaped elements.

### [Present Invention 2]

The tire according to Present Invention 1, in which
each of the plurality of first groove-shaped elements is opened at the first tread end, and
each of the plurality of second groove-shaped elements is opened at the second tread end.

### [Present Invention 3]

The tire according to Present Invention 1 or 2, in which
each of the plurality of first groove-shaped elements is inclined relative to the tire axial direction in a first direction, and
each of the plurality of second groove-shaped elements is inclined relative to the tire axial direction in a second direction opposite to the first direction.

### [Present Invention 4]

The tire according to Present Invention 3, in which each of the plurality of first groove-shaped elements and the plurality of second groove-shaped elements is curved in an arc shape.

### [Present Invention 5]

The tire according to Present Invention 1 or 2, in which
the first inner ends of the plurality of first groove-shaped elements respectively communicate with the second groove-shaped elements, and
the second inner ends of the plurality of second groove-shaped elements respectively communicate with the first groove-shaped elements.

### [Present Invention 6]

The tire according to Present Invention 5, in which one of the first groove-shaped elements and one of the second groove-shaped elements communicate with each other so as to form a V shape.

### [Present Invention 7]

The tire according to Present Invention 1 or 2, in which
each of the plurality of first groove-shaped elements terminates in the ground-contact surface such that the first inner end thereof does not communicate with another groove, and
each of the plurality of second groove-shaped elements terminates in the ground-contact surface such that the second inner end thereof does not communicate with another groove.

### [Present Invention 8]

The tire according to Present Invention 1, in which each of the plurality of first groove-shaped elements and the plurality of second groove-shaped elements is opened at the first tread end.

### [Present Invention 9]

The tire according to Present Invention 8, in which each of the plurality of first groove-shaped elements and each of the plurality of second groove-shaped elements are inclined relative to the tire axial direction in the same direction.

### [Present Invention 10]

The tire according to Present Invention 9, in which
the plurality of groove-shaped elements include a plurality of third groove-shaped elements and a plurality of fourth groove-shaped elements,
each of the plurality of third groove-shaped elements and each of the plurality of fourth groove-shaped elements are opened at the second tread end, and are inclined relative to the tire axial direction in the same direction,
the plurality of third groove-shaped elements and the plurality of fourth groove-shaped elements are arranged in a second arrangement pattern over one round of the tire,
each of the plurality of third groove-shaped elements has a third outer end opened at the second tread end, and a third inner end disposed on the center portion side of the ground-contact surface,
each of the plurality of fourth groove-shaped elements has a fourth outer end opened at the second tread end, and a fourth inner end disposed on the center portion side of the ground-contact surface, and
in the second arrangement pattern,
the third outer end of one of the third groove-shaped elements is disposed at the same position in the tire circumferential direction as the fourth inner end of one of the fourth groove-shaped elements, and
the fourth outer end of one of the fourth groove-shaped elements is disposed at the same position in the tire circumferential direction as the third inner end of one of the third groove-shaped elements.

### [Present Invention 11]

The tire according to Present Invention 10, in which
the first inner ends of the first groove-shaped elements communicate with the fourth groove-shaped elements,
the second inner ends of the second groove-shaped elements communicate with the third groove-shaped elements,
the third inner ends of the third groove-shaped elements communicate with the first groove-shaped elements, and
the fourth inner ends of the fourth groove-shaped elements communicate with the second groove-shaped elements.

### [Present Invention 12]

The tire according to Present Invention 1 or 2, in which each of the plurality of groove-shaped elements is a groove having a width of larger than 2 mm.

### [Present Invention 13]

The tire according to Present Invention 1 or 2, in which each of the plurality of groove-shaped elements is a sipe having a width of not larger than 2 mm.

### [Present Invention 14]

The tire according to Present Invention 1 or 2, in which a length, in the tire axial direction, of each of the plurality of first groove-shaped elements and the plurality of second groove-shaped elements is not less than 40% of a tread width.

## Claims

1. A tire (1) comprising a tread portion (2), wherein
the tread portion (2) includes a first tread end (T1) and a second tread end (T2), and a ground-contact surface (2s) between the first tread end (T1) and the second tread end (T2),
the tread portion (2) has a plurality of groove-shaped elements (5) opened at either one of the first tread end (T1) or the second tread end (T2) and extending to a center portion (4), in a tire axial direction, of the ground-contact surface (2s),
the plurality of groove-shaped elements (5) include a plurality of first groove-shaped elements (6) and a plurality of second groove-shaped elements (7) which are inclined relative to a tire circumferential direction and the tire axial direction,
the plurality of first groove-shaped elements (6) and the plurality of second groove-shaped elements (7) are arranged in a first arrangement pattern over one round of the tire (1),
each of the plurality of first groove-shaped elements (6) has a first outer end (6o) opened at the first tread end (T1) or the second tread end (T2), and a first inner end (6i) disposed on the center portion (4) side of the ground-contact surface (2s),
each of the plurality of second groove-shaped elements (7) has a second outer end (7o) opened at the first tread end (T1) or the second tread end (T2), and a second inner end (7i) disposed on the center portion (4) side of the ground-contact surface (2s), and
in the first arrangement pattern,
the first outer end (6o) of one of the first groove-shaped elements (6) is disposed at the same position in the tire circumferential direction as the second inner end (7i) of one of the second groove-shaped elements (7), and
the second outer end (7o) of one of the second groove-shaped elements (7) is disposed at the same position in the tire circumferential direction as the first inner end (6i) of one of the first groove-shaped elements (6).

2. The tire (1) according to claim 1, wherein
each of the plurality of first groove-shaped elements (6) is opened at the first tread end (T1), and
each of the plurality of second groove-shaped elements (7) is opened at the second tread end (T2).

3. The tire (1) according to claim 1 or 2, wherein
each of the plurality of first groove-shaped elements (6) is inclined relative to the tire axial direction in a first direction, and
each of the plurality of second groove-shaped elements (7) is inclined relative to the tire axial direction in a second direction opposite to the first direction.

4. The tire (1) according to claim 3, wherein each of the plurality of first groove-shaped elements (6) and the plurality of second groove-shaped elements (7) is curved in an arc shape.

5. The tire (1) according to one of claims 1 to 4, wherein
the first inner ends (6i) of the plurality of first groove-shaped elements (6) respectively communicate with the second groove-shaped elements (7), and
the second inner ends (7i) of the plurality of second groove-shaped elements (7) respectively communicate with the first groove-shaped elements (6).

6. The tire (1) according to claim 5, wherein one of the first groove-shaped elements (6) and one of the second groove-shaped elements (7) communicate with each other so as to form a V shape.

7. The tire (1) according to one of claims1 to 4, wherein
each of the plurality of first groove-shaped elements (6) terminates in the ground-contact surface (2s) such that the first inner end (6i) thereof does not communicate with another groove, and
each of the plurality of second groove-shaped elements (7) terminates in the ground-contact surface (2s) such that the second inner end (7i) thereof does not communicate with another groove.

8. The tire (1) according to one of claims 1 to 7, wherein each of the plurality of first groove-shaped elements (6) and the plurality of second groove-shaped elements (7) is opened at the first tread end (T1).

9. The tire (1) according to claim 8, wherein each of the plurality of first groove-shaped elements (6) and each of the plurality of second groove-shaped elements (7) are inclined relative to the tire axial direction in the same direction.

10. The tire (1) according to claim 9, wherein
the plurality of groove-shaped elements (5) include a plurality of third groove-shaped elements (8) and a plurality of fourth groove-shaped elements (9),
each of the plurality of third groove-shaped elements (8) and each of the plurality of fourth groove-shaped elements (9) are opened at the second tread end (T2), and are inclined relative to the tire axial direction in the same direction,
the plurality of third groove-shaped elements (8) and the plurality of fourth groove-shaped elements (9) are arranged in a second arrangement pattern over one round of the tire (1),
each of the plurality of third groove-shaped elements (8) has a third outer end (8o) opened at the second tread end (T2), and a third inner end (8i) disposed on the center portion (4) side of the ground-contact surface (2s),
each of the plurality of fourth groove-shaped elements (9) has a fourth outer end (9o) opened at the second tread end (T2), and a fourth inner end (9i) disposed on the center portion (4) side of the ground-contact surface (2s), and
in the second arrangement pattern,
the third outer end (8o) of one of the third groove-shaped elements (8) is disposed at the same position in the tire circumferential direction as the fourth inner end (9i) of one of the fourth groove-shaped elements (9), and
the fourth outer end (9o) of one of the fourth groove-shaped elements (9) is disposed at the same position in the tire circumferential direction as the third inner end (8i) of one of the third groove-shaped elements (8).

11. The tire (1) according to claim 10, wherein
the first inner ends (6i) of the first groove-shaped elements (6) communicate with the fourth groove-shaped elements (9),
the second inner ends (7i) of the second groove-shaped elements (7) communicate with the third groove-shaped elements (8),
the third inner ends (8i) of the third groove-shaped elements (8) communicate with the first groove-shaped elements (6), and
the fourth inner ends (9i) of the fourth groove-shaped elements (9) communicate with the second groove-shaped elements (7).

12. The tire (1) according to one of claims 1 to 11, wherein each of the plurality of groove-shaped elements (5) is a groove having a width of larger than 2 mm.

13. The tire (1) according to one of claims 1 to 11, wherein each of the plurality of groove-shaped elements (5) is a sipe having a width of not larger than 2 mm.

14. The tire (1) according to one of claims 1 to 13, wherein a length (L1), in the tire axial direction, of each of the plurality of first groove-shaped elements (6) and the plurality of second groove-shaped elements (7) is not less than 40% of a tread width.
